# EUROPÄISCHE PATENTSCHRIFT

(11) **EP 3 105 109 B1**
(45) Veröffentlichungstag und Bekanntmachung des Hinweises auf die Patenterteilung: **20.02.2019**
(21) Anmeldenummer: 15705948.6
(22) Anmeldetag: 11.02.2015
(51) Int. Cl.: B62D 21/14, B60P 1/02, B62D 63/06

(54) **BREITENVERSTELLBARES MODULARES SCHWERLASTFAHRZEUG UND QUERRAHMENMODUL FÜR EIN DERARTIGES SCHWERLASTFAHRZEUG**
WIDTH-ADJUSTABLE MODULAR HEAVY GOODS VEHICLE, AND TRANSVERSE FRAME MODULE FOR A HEAVY GOODS VEHICLE OF SAID TYPE
POIDS LOURD MODULAIRE AJUSTABLE EN LARGEUR ET MODULE DE CHÂSSIS TRANSVERSAL POUR UN POIDS LOURD DE CE TYPE

(30) Priorität: 14.02.2014 DE 102014202726
(43) Veröffentlichungstag der Anmeldung: 21.12.2016
(73) Patentinhaber: Goldhofer AG, 87700 Memmingen (DE)
(72) Erfinder: HÄFELE, Horst, 87727 Babenhausen (DE)
(74) Vertreter: Weickmann & Weickmann PartmbB
(86) Internationale Anmeldenummer: PCT/EP2015/052847
(87) Internationale Veröffentlichungsnummer: WO 2015/121291

(56) Entgegenhaltungen:
- WO-A1-2010/094935
- AU-A1- 2009 200 341
- DE-U1-202012 011 898
- FR-A1- 2 399 351
- US-A- 3 698 734
- US-B1- 6 206 126

## Beschreibung

Die Erfindung betrifft ein modulares Schwerlastfahrzeug gemäß dem Oberbegriff des Anspruchs 1.

An dieser Stelle sei darauf hingewiesen, dass im Zusammenhang mit der vorliegenden Erfindung Richtungsangaben, beispielsweise "links", "rechts", "vorne", "hinten" und dergleichen, sich zum einen auf einen fahrbereiten Zustand des modularen Schwerlastfahrzeugs beziehen und zum anderen eine Blickrichtung unterstellen, die mit der Vorwärtsfahrtrichtung des modularen Schwerlastfahrzeugs zusammenfällt. Dieser fahrbereite Zustand und diese Blickrichtung werden auch der Beschreibung der einzelnen Module, aus denen das modulare Schwerlastfahrzeug zusammengesetzt ist, zugrunde gelegt.

Modulare Schwerlastfahrzeuge bzw. Module für derartige modulare Schwerlastfahrzeugs werden von der Anmelderin seit vielen Jahren erfolgreich vertrieben. Das Grundprinzip der Modulbauweise besteht darin, dass den Transportunternehmen ein Baukasten von miteinander kombinierbaren Modulen zur Verfügung gestellt wird, aus denen für jeden Transportauftrag ein für den Transport der jeweiligen Last geeignetes Fahrzeug zusammengebaut werden kann.

Insbesondere im Hinblick auf die besonderen Zulassungs- und Betriebsvorschriften in den U.S.A. und Australien wurden von der Anmelderin dabei auch die gattungsgemäßen modularen Schwerlastfahrzeuge entwickelt, die über einen in der Fahrzeuglängsmittelebene geteilten Fahrzeugrahmen verfügen, so dass nicht nur durch Hintereinanderanordnen einer Mehrzahl von Fahrzeugmodulen die gewünschte Fahrzeuglänge erhalten werden kann, sondern durch die Anordnung von sich in Fahrzeugbreitenrichtung erstreckenden Verbindungseinheiten zwischen den linken und rechten Fahrzeugmodulen auch die gewünschte Fahrzeugbreite. Auf diese Weise lassen sich beispielsweise Fahrzeugbreiten von bis zu 6100 mm (20 Fuß) erzielen.

Wie man leicht einsieht, unterliegt der Betrieb derartiger Schwerlastfahrzeuge besonderen Vorschriften, da sie aufgrund ihrer hohen Fahrzeugbreite mehr als eine Fahrbahn einnehmen. Durch die Absicherung des Betriebs durch Begleit- oder gar Polizeifahrzeuge entstehen aber hohe Kosten, die zwar während des Transports der Last zum Zielort unumgänglich sind, für die Rückfahrt im nicht beladenen Zustand aber nicht akzeptiert werden. Die gattungsgemäßen modularen Schwerlastfahrzeuge der Anmelderin bieten dem Fahrzeugbetreiber diesbezüglich die Möglichkeit, die Fahrzeuge nach dem Abladen der Last am Zielort auseinanderzubauen, insbesondere die sich in Fahrzeugbreitenrichtung erstreckenden Verbindungseinheiten auszubauen, so dass die linken und rechten Fahrzeugmodule unmittelbar aneinander befestigt werden können. Selbstverständlich nimmt aber auch dieser Umbau Arbeitszeit in Anspruch und verursacht daher Kosten.

Aus dem Dokument FR 2 399 351 A1 ist ein Schwerlastfahrzeug bekannt, welches zwei Längsrahmenteile umfasst, die an Querrahmenmodulen angebracht sind, wobei die Querrahmenmodule längenveränderbar sind. Ferner sei auf die DE 20 2012 011898 U1 hingewiesen.

Es ist daher Aufgabe der vorliegenden Erfindung, ein modulares Schwerlastfahrzeug der eingangs genannten Art anzugeben, dessen Fahrzeugbreite schnell und damit kostengünstig verändert werden kann.

Diese Aufgabe wird erfindungsgemäß durch ein modulares Schwerlastfahrzeug gemäß Anspruch 1 gelöst.

Erfindungsgemäß bilden die erfindungsgemäßen längenveränderbaren Querrahmenmodule weitere "Bausteine" des Baukastens, der den Transportunternehmen zur Verfügung gestellt werden kann.

Der Begriff "Querrahmenmodul" wird im Zusammenhang mit der vorliegenden Erfindung in dem Sinn verwendet, dass in jedem Querrahmenmodul alle Funktionselemente enthalten sind, welche für die Bereitstellung der Längenveränderbarkeit erforderlich sind, so dass die linken und rechten Fahrzeugmodule mit ihren sich in Fahrzeuglängsrichtung erstreckenden linken und rechten Längsrahmenteilen frei von für die Bereitstellung der Längenveränderbarkeit erforderlichen Funktionselementen ausgebildet sind. Somit können die Querrahmenmodule mit beliebig ausgebildeten, insbesondere sich bereits im Besitz von Transportunternehmen befindenden, linken und rechten Fahrzeugmodulen kombiniert werden, solange sie mit diesen nur betriebsfest verbunden werden können, um letztendlich ein breitenverstellbares modulares Schwerlastfahrzeug zu erhalten. Selbstverständlich umfasst der Gegenstand der vorliegenden Erfindung auch modulare Schwerlastfahrzeuge, bei denen zusätzlich zu den linken und rechten Fahrzeugmodulen mit ihren sich in Fahrzeuglängsrichtung erstreckenden linken und rechten Längsrahmenteilen und den beiden längenveränderbaren Querrahmenmodulen weitere Module vorhanden sind. Beispielsweise können sich in Fahrzeuglängsrichtung weitere linke und rechte Fahrzeugmodule anschließen, die wiederum mit einem weiteren längenveränderbaren Querrahmenmodul abgeschlossen sind. Vorzugsweise sollte etwa alle 10 m ein längenverstellbares Querrahmenmodul vorgesehen sein.

In Weiterbildung der Erfindung wird vorgeschlagen, dass wenigstens ein Querrahmenmodul, vorzugsweise alle längenverstellbaren Querrahmenmodule, teleskopierbar ineinander greifende, einen Hohlraum umschließende Querrahmenteile umfasst, wobei in dem Hohlraum wenigstens ein die Längenveränderung des Querrahmenmoduls bewirkendes Kraftgerät angeordnet ist. Auf diese Weise kann die Tragfunktion des Querrahmenmoduls von den teleskopierbar ineinander greifenden Querrahmenteilen übernommen werden, während die Längenveränderbarkeit durch das wenigstens eine Kraftgerät bereitgestellt wird. Das Kraftgerät kann beispielsweise ein hydraulisch und/oder pneumatisch betätigbares Kraftgerät sein.

Beispielsweise kann das wenigstens eine Querrahmenmodul ein zentrales Querrahmenteil mit zwei Seitenabschnitten umfassen sowie zwei seitliche Querrahmenteile, die die Seitenabschnitte des zentralen Querrahmenteils umgreifen und relativ zu diesen verschiebbar sind. Darüber hinaus kann zwischen den beiden Seitenabschnitten des zentralen Querrahmenteils ein Mittelabschnitt vorgesehen sein, der vorzugsweise mit den beiden Seitenabschnitten einstückig ausgebildet ist. Während die beiden seitlichen Rahmenteile zur Anbringung von Funktionselementen dienen können, welche bei einer Veränderung der Fahrzeugbreite ebenfalls in der Breitenrichtung des Fahrzeugs verstellt werden, kann der Mittelabschnitt zur Anbringung von Funktionselementen dienen, welche bei einer Veränderung der Fahrzeugbreite nicht in der Breitenrichtung des Fahrzeugs verstellt werden sollen.

Die Funktionselemente, welche bei einer Veränderung der Fahrzeugbreite ebenfalls in der Breitenrichtung des Fahrzeugs verstellt werden, können beispielsweise Kupplungselemente für das Ankuppeln des Querrahmenmoduls an die linken und rechten Fahrzeugmodule sein oder/und Kupplungselemente für das Ankuppeln des Querrahmenmoduls als Zwischenglied zwischen mehreren hintereinander angeordneten Fahrzeugmodulen beim Zusammenbau eines modularen Schwerlastfahrzeugs, das in Fahrzeuglängsrichtung über mehrere hintereinander angeordnete linke und rechte Fahrzeugmodule verfügt, oder/und klappbare Auffahrrampen, beispielsweise für ein Fahrzeug, das auf dem modularen Schwerlastfahrzeug transportiert werden soll.

Ferner können die Funktionselemente, welche bei einer Veränderung der Fahrzeugbreite nicht in der Breitenrichtung des Fahrzeugs verstellt werden sollen, beispielsweise Kupplungselemente für das Ankuppeln des Querrahmenmoduls an ein in der Breite nicht verstellbares Fahrzeugmodul sein oder/und Kupplungselemente für die Anbringung einer Deichselbaugruppe.

In diesem Zusammenhang ist es vorteilhaft, wenn wenigstens eines der Querrahmenmodule an der Stirnfläche des jeweils zugeordneten Längsendes der beiden Längsrahmenteile lösbar befestigbar ist. Bei dieser Ausgestaltung können die an den linken und rechten Fahrzeugmodulen zur Verbindung mit weiteren linken und rechten Fahrzeugmodulen ohnehin vorhandenen Kupplungselemente auch zur Verbindung der Querrahmenmodule mit den linken und rechten Fahrzeugmodulen genutzt werden.

Eine erste Ausführungsvariante eines erfindungsgemäßen Querrahmenmoduls kann beispielsweise an dessen vorderer Seite Kupplungselemente für die Anbringung einer Deichselbaugruppe und an dessen hinterer Seite Kupplungselemente für das Ankuppeln des Querrahmenmoduls an die linken und rechten Fahrzeugmodule aufweisen. Ein derartiges Querrahmenmodul kann beispielsweise am vorderen Ende des modularen Schwerlastfahrzeugs zur Anbringung der Zugdeichsel vorgesehen sein. Zusätzlich kann man ein solches Querrahmenmodul aber auch am hinteren Ende des modularen Schwerlastfahrzeugs vorsehen.

Eine zweite Ausführungsvariante eines erfindungsgemäßen Querrahmenmoduls kann beispielsweise an dessen vorderer Seite Kupplungselemente für das Ankuppeln des Querrahmenmoduls an die linken und rechten Fahrzeugmodule und an dessen hinterer Seite klappbare Auffahrrampen, beispielsweise für ein Fahrzeug, das auf dem modularen Schwerlastfahrzeug transportiert werden soll, aufweisen. Ein derartiges Querrahmenmodul wird bevorzugt am hinteren Ende des modularen Schwerlastfahrzeugs angeordnet sein.

Eine dritte Ausführungsvariante eines erfindungsgemäßen Querrahmenmoduls kann beispielsweise sowohl an dessen vorderer Seite als auch an dessen hinterer Seite Kupplungselemente für das Ankuppeln des Querrahmenmoduls an linke und rechte Fahrzeugmodule aufweisen. Dieser Typ von Querrahmenmodul wird bevorzugt für das Zusammenstellen längerer breitenverstellbarer Schwerlastfahrzeuge aus einer Vielzahl von rechten und linken Fahrzeugmodulen verwendet. Zur Sicherstellung der Stabilität des Schwerlastfahrzeugs ist es, wie vorstehend bereits erwähnt, vorteilhaft, wenn etwa alle 10 m ein derartiges Querrahmenmodul vorgesehen ist.

Eine vierte Ausführungsvariante eines erfindungsgemäßen Querrahmenmoduls kann beispielsweise an dessen vorderer Seite Kupplungselemente für das Ankuppeln des Querrahmenmoduls an die linken und rechten Fahrzeugmodule und an dessen hinterer Seite Kupplungselemente für das Ankuppeln des Querrahmenmoduls an ein in der Breite nicht verstellbares Fahrzeugmodul aufweisen.

Vorteilhafterweise kann jedem der seitlichen Querrahmenteile ein gesondertes Kraftgerät zugeordnet sein, dessen eines Ende an dem zentralen Querrahmenteil und dessen anderes Ende an dem jeweiligen seitlichen Querrahmenteil angreift. Dies hat zum einen den Vorteil, dass jedes der Kraftgeräte schwächer und damit kleiner und kostengünstiger ausgebildet sein kann, als wenn die zur Breitenverstellung erforderliche Kraft von einem einzigen Kraftgerät erzeugt werden müsste. Und zum anderen ermöglicht es diese Ausgestaltung, in dem Querrahmenmodul, beispielsweise in dem Mittelabschnitt des zentralen Querrahmenteils, Durchgangsöffnungen für den Durchtritt von Funktionselementen, insbesondere für den Durchtritt von Lenkstangen, vorzusehen.

Im Hinblick auf die Tragfunktion kann das wenigstens eine Querrahmenmodul in einem zur Fahrzeugbreitenrichtung im Wesentlichen orthogonal verlaufenden Schnitt ein Rechtecks- oder Quadratprofil aufweisen, wobei zwei der Seitenflächen des Rechtecks- oder Quadratprofils vorzugsweise im Wesentlichen orthogonal zur Fahrzeuglängsrichtung verlaufen.

Um nach Einstellung des modularen Schwerlastfahrzeugs auf die gewünschte Fahrzeugbreite während des Fahrbetriebs die geforderte Breitenstabilität des Fahrzeugs sicherstellen zu können, wird in Weiterbildung der Erfindung vorgeschlagen, dass die teleskopierbar ineinander greifenden Rahmenelemente, beispielsweise jedes der seitlichen Querrahmenteile und der jeweils zugehörige Seitenabschnitt des zentralen Querrahmenteils, in lösbarer Weise betriebsfest miteinander verbindbar sind. Beispielsweise können die seitlichen Querrahmenteile über ein Durchgangsloch zum Hindurchführen eines Eingriffsbolzens und die zugehörigen Seitenabschnitte des zentralen Querrahmenteils über eine Mehrzahl von Eingriffsvertiefungen oder Eingriffsausnehmungen verfügen, in welche der Eingriffsbolzen einführbar ist. Der Eingriffsbolzen kann beispielsweise ein Bolzen mit glatter Oberfläche sein, der in glattwandige Eingriffsvertiefungen oder Eingriffsausnehmungen eingreift und in diese Eingriffsstellung vorgespannt, beispielsweise federvorgespannt, ist. Alternativ kann der Eingriffsbolzen aber auch ein mit einem Außengewinde versehener Bolzen sein und können die Eingriffsvertiefungen oder Eingriffsausnehmungen mit einem entsprechenden Gegengewinde ausgebildet sein.

Ferner ist es von Vorteil, wenn eine Anzeige vorgesehen ist, welche die Relativstellung des seitlichen Querrahmenteils und des zugehörigen Seitenabschnitts des zentralen Querrahmenteils anzeigt. Diese Anzeige kann beispielsweise ein Fenster in dem seitlichen Querrahmenteil umfassen, in dem jeweils eine einer Mehrzahl von Markierungen zu sehen ist, welche den Eingriffsvertiefungen oder Eingriffsausnehmungen zugeordnet sind.

Aus Gründen der Fahrsicherheit ist es vorteilhaft, wenn beide seitlichen Querrahmenteile bezüglich des jeweils zugehörigen Seitenabschnitts des zentralen Querrahmenteils die gleiche Relativstellung einnehmen.

Um unabhängig von der jeweils eingestellten Fahrzeugbreite eine ordnungsgemäße Ansteuerung der deichselgesteuerten Lenkungeinrichtung des Schwerlastfahrzeugs sicherstellen zu können, wird vorgeschlagen, dass ein mit einer Eingangslenkstange der deichselgesteuerten Lenkung verbundenes Lenkwinkelweiterleitungselement vorgesehen ist, welches relativ zur Deichsel verschwenkbar und mit der Deichsel in wenigstens einer Relativschwenkstellung lösbar verbindbar ist.

Vorteilhafterweise ist die Achse, um welche das Lenkwinkelweiterleitungselement relativ zur Deichsel verschwenkbar ist, mit der Achse identisch, um welche die Deichsel relativ zum modularen Schwerlastfahrzeug schwenkbar ist. Gemäß dieser Weiterbildung lassen sich die Änderungen in der Lenkwinkelübersetzung bei Relativverschwenken von Deichsel und Lenkwinkelweiterleitungselement in einfacher Weise kontrollieren. Um die Lenkwinkelübersetzung in einfacher Weise an die jeweils gewählte Fahrzeugbreite anpassen zu können, kann die Deichsel oder ein mit ihr verbundenes Element über ein Durchgangsloch zum Hindurchführen eines Eingriffsbolzens und das Lenkwinkelweiterleitungselement über eine Mehrzahl von Eingriffsvertiefungen oder Eingriffsausnehmungen verfügen, in welche der Eingriffsbolzen einführbar ist und von denen jede einer vorbestimmten Fahrzeugbreite entspricht. Auch hier kann die Mehrzahl von Eingriffsvertiefungen oder Eingriffsausnehmungen mit Markierungen versehen sein, und zwar vorzugsweise mit Markierungen, welche jenen an den Querrahmenmodulen entsprechen, um es einer Bedienungsperon zu erleichtern die Querrahmenmodule und die Deichsellenkung zueinander passend einzustellen. Es ist also vorteilhaft, wenn zwischen den Eingriffsvertiefungen oder Eingriffsausnehmungen des Lenkwinkelweiterleitungselement und jenen des Querrahmenmoduls eine feste Zuordnung besteht.

Die Erfindung wird im Folgenden anhand der beigefügten Zeichnung an Ausführungsbeispielen näher erläutert werden. Es stellt dar:
- Figur 1: eine Perspektivansicht eines erfindungsgemäßen Schwerlastfahrzeugs;
- Figur 2: eine Seitenansicht des erfindungsgemäßen Schwerlastfahrzeugs aus Figur 1;
- Figur 3: eine Draufsicht des erfindungsgemäßen Schwerlastfahrzeugs aus Figur 1 in dessen Betriebsstellung mit der geringsten Breite;
- Figur 4: eine Draufsicht des erfindungsgemäßen Schwerlastfahrzeugs aus Figur 1 in dessen Betriebsstellung mit der größten Breite;
- Figur 5: eine Seitenansicht einer ersten Ausführungsform eines erfindungsgemäßen Querrahmenmoduls;
- Figur 6: eine Vorderansicht, d.h. eine Ansicht in Fahrzeuglängsrichtung, des Querrahmenmoduls der Figur 5;
- Figur 7: eine längs der Linie VII-VII in Figur 5 genommene Schnittansicht des Querrahmenmoduls der Figur 5;
- Figur 8: eine längs der Linie VIII-VIII in Figur 5 genommene Schnittansicht des Querrahmenmoduls der Figur 5;
- Figur 9: eine Seitenansicht einer zweiten Ausführungsform eines erfindungsgemäßen Querrahmenmoduls;
- Figur 10: eine Vorderansicht, d.h. eine Ansicht in Fahrzeuglängsrichtung, des Querrahmenmoduls der Figur 9;
- Figur 11: eine Seitenansicht einer dritten Ausführungsform eines erfindungsgemäßen Querrahmenmoduls;
- Figur 12: eine längs der Linie XII-XII in Figur 11 genommene Schnittansicht des Querrahmenmoduls der Figur 11;
- Figur 13: eine Seitenansicht einer vierten Ausführungsform eines erfindungsgemäßen Querrahmenmoduls;
- Figur 14: eine Perspektivansicht des Querrahmenmoduls der Figur 13;
- Figur 15: eine Perspektivansicht einer Deichselbaugruppe, wie sie gemäß Figuren 1 bis 4 an die erste Ausführungsform eines erfindungsgemäßen Querrahmenmoduls gemäß Figuren 5 bis 8 angebaut werden kann; und
- Figur 16: eine zweite Ausführungsform eines erfindungsgemäßen Schwerlastfahrzeugs.

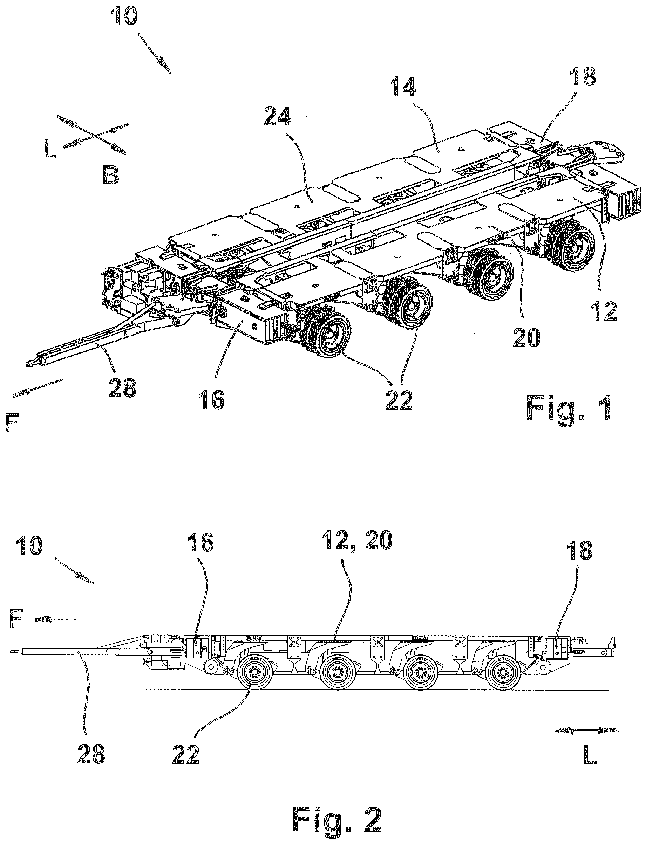

In Figur 1 ist ein erfindungsgemäßes modulares Schwerlastfahrzeug allgemein mit 10 bezeichnet. In Vorwärtsfahrtrichtung F gesehen, umfasst das Schwerlastfahrzeug 10 ein linkes Fahrzeugmodul 12 und ein rechtes Fahrzeugmodul 14, ein vorderes Querrahmenmodul 16 und ein hinteres Querrahmenmodul 18, die in dem dargestellten Ausführungsbeispiel jedoch identisch ausgebildet sind.

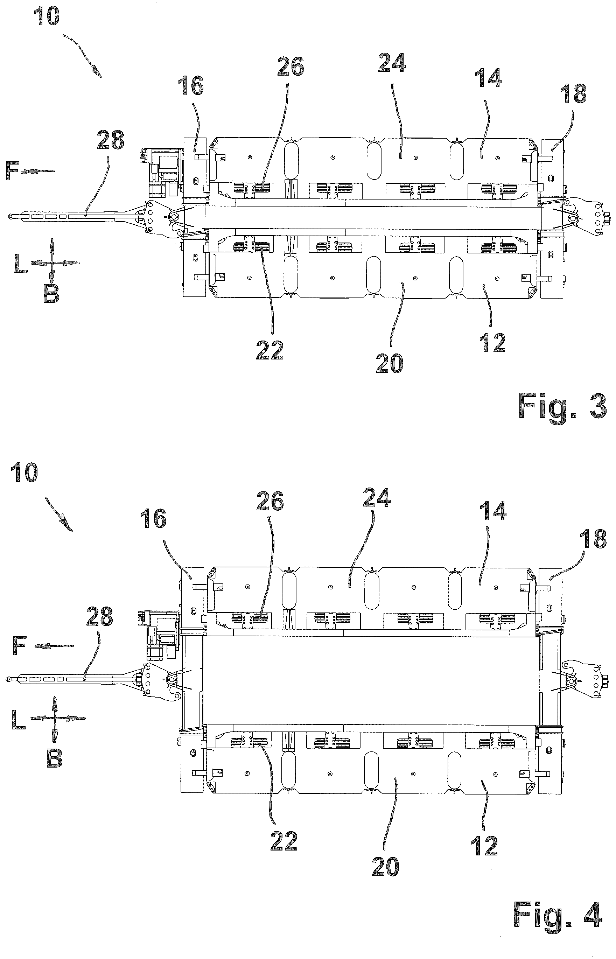

Das linke Fahrzeugmodul 12 umfasst ein linkes Längsrahmenteil 20, an dem eine Mehrzahl von in Längsrichtung L des Schwerlastfahrzeugs 10 hintereinander angeordneten linken Radbaugruppen 22 angeordnet ist. In analoger Weise umfasst das rechte Fahrzeugmodul 14 ein rechtes Längsrahmenteil 24, an dem eine Mehrzahl von in Längsrichtung L hintereinander angeordneten linken Radbaugruppen 26 (siehe Figuren 3 und 4) angeordnet ist. Die beiden Querrahmenmodule 16, 18 sind an den beiden Längsenden der Längsrahmenteile 20 und 24 angeordnet und mit diesen zur Bildung des modularen Schwerlastfahrzeugs 10 betriebsfest verbunden.

Wie man den Figuren 3 und 4 entnimmt, sind die Querrahmenteile in der durch den Doppelpfeil B angedeuteten Fahrzeugbreitenrichtung längenveränderbar ausgebildet, um die Breite des Schwerlastfahrzeugs 10 verändern zu können. Beispielsweise kann das Schwerlastfahrzeug 10 für eine Transportfahrt, während der es mit einer Last beladen ist, auf eine große Fahrzeugbreite eingestellt werden, wie dies in Figur 4 dargestellt ist, während es für eine Leerfahrt ohne Last auf eine geringe Breite eingestellt wird, wie dies in Figur 3 dargestellt ist. Auf die diese Breitenverstellung ermöglichende Ausbildung der Querrahmenmodule 16 und 18 wird nachstehend noch im Detail eingegangen werden.

Zuvor sei aber noch darauf hingewiesen, dass die linken und rechten Fahrzeugmodule 12 und 14 herkömmliche Fahrzeugmodule sein können, wie sie von der Anmelderin schon seit Längerem als Teile eines Baukastenprogramms angeboten und vertrieben werden. Die linken und rechten Fahrzeugmodule 12 und 14 bilden quasi Bausteine dieses Baukastenprogramms, das auch noch weitere Arten von Bausteine beinhalten kann. Beispielsweise kann das Baukastenprogramm neben den vierachsigen Fahrzeugmodulen 12, 14 auch Fahrzeugmodule mit beispielsweise zwei, drei oder sechs Achsen umfassen, Ladebrücken unterschiedlichster Art, beispielsweise Flachbettbrücken, Kesselbrücken oder dergleichen, und viele weitere Arten von Bausteinen. Aus all diesen Bausteinen kann ein Transportunternehmer, der den Auftrag hat, eine bestimmte Last über eine vorgegebene Strecke zu transportieren, ein auf den Transport der bestimmten Last über die vorgegebene Strecke abgestimmtes Schwerlastfahrzeug zusammenbauen. Die längenveränderbaren Querrahmenmodule bilden neue Bausteine des Baukastenprogramms, ergänzen dieses somit und erhöhen die Flexibilität der Transportunternehmer, auf die Anforderungen des jeweiligen Transportauftrags zu reagieren.

Nachzutragen ist an dieser Stelle, dass das in den Figuren 1 bis 4 dargestellte Schwerlastfahrzeug 10 kein selbstfahrendes Fahrzeug ist, sondern ein Nachlauffahrzeug, das mittels einer Deichselbaugruppe 28 mit einem (nicht dargestellten) Zugfahrzeug verbunden werden kann. Grundsätzlich ist es jedoch auch denkbar, dass die Radbaugruppen 22, 26 angetriebene Radbaugruppen sind, die mittels eines Elektromotors oder/und eines Hydromotor angetrieben sind, so dass das Schwerlastfahrzeug 10 als so genannter "Selbstfahrer" ohne deichselgesteuerte Lenkeinrichtung 28 auskommt.

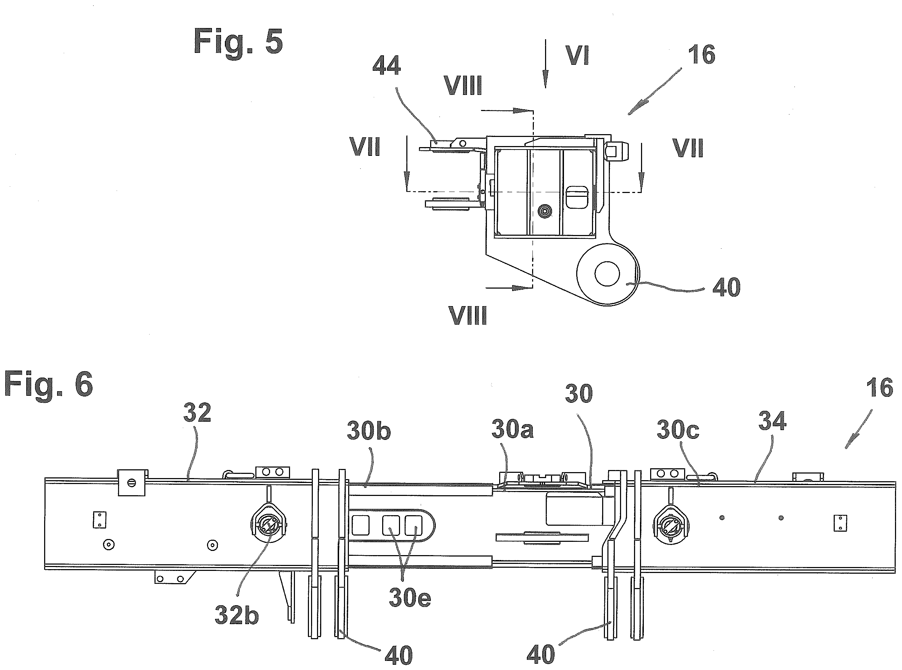

In den Figuren 5 bis 14 sind vier Varianten von Querrahmenmodulen dargestellt, wie sie im Rahmen der vorliegenden Erfindung zum Einsatz kommen können. Alle vier Varianten verfügen über einen gemeinsamen Grundaufbau, der zunächst am Beispiel der in den Figuren 5 bis 8 näher dargestellten ersten Variante, nämlich am Beispiel der bei dem Schwerlastfahrzeug 10 der Figuren 1 bis 4 an beiden Längsenden zum Einsatz kommenden Querrahmenmodule 16, 18, erläutert werden soll, bevor anschließend auf die spezifischen zusätzlichen Merkmale der vier Varianten eingegangen werden wird.

Das Querrahmenmodul 16 umfasst ein zentrales Querrahmenteil 30 mit einem Mittelabschnitt 30a und zwei Seitenabschnitten 30b und 30c sowie zwei seitliche Querrahmenteile 32, 34, die die Seitenabschnitte 30b bzw. 30c des zentralen Querrahmenteils 30 umgreifen und zur Ermöglichung der Längenveränderung des Querrahmenmoduls 16 relativ zu diesen verschiebbar sind. Der Mittelabschnitt 30a wird von jenem Abschnitt des zentralen Querrahmenteils 30 gebildet, der dann, wenn die seitlichen Querrahmenteile 32, 34 vollständig auf den zentralen Mittelabschnitt 30 aufgeschoben sind, von den seitlichen Querrahmenteilen 32, 34 nicht überdeckt ist.

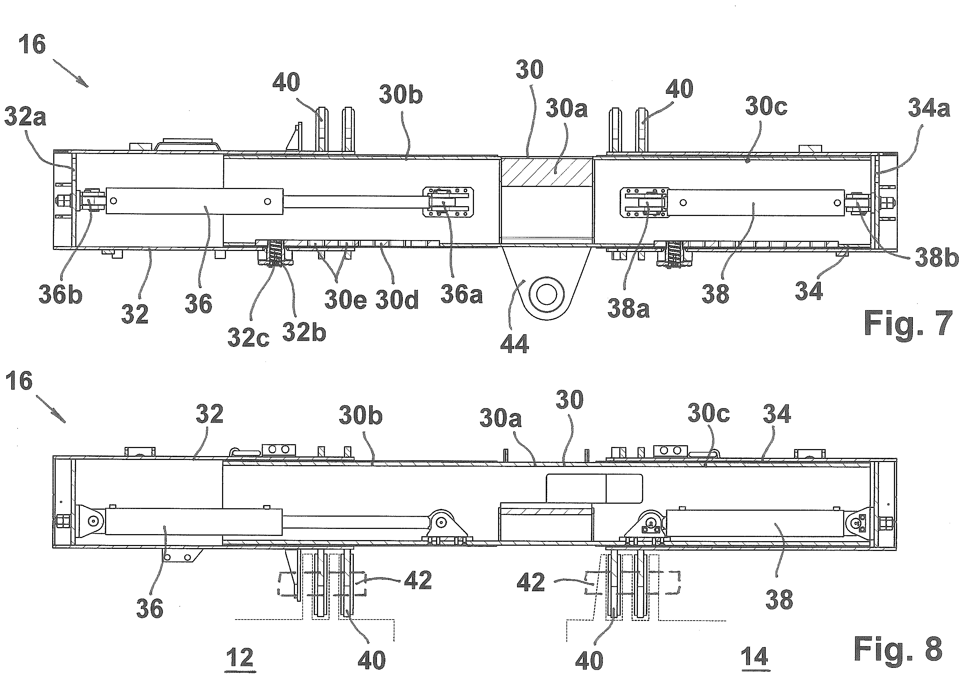

Wie man beispielsweise Figur 5 entnimmt, sind das zentrale Querrahmenteil 30 und die seitlichen Querrahmenteile 32, 34 jeweils als Hohlprofilelemente mit rechteckigem bzw. quadratischem Profilquerschnitt ausgebildet. Dies ergibt einen robusten Aufbau des Querrahmenmoduls, so dass das Schwerlastfahrzeug 10 die für den Schwerlasttransport erforderliche Stabilität aufweist. In dem von den Querrahmenteilen 30, 32, 34 umschlossenen Hohlraum sind zwei Kraftgeräte 36 und 38 angeordnet, von denen jedes einem der seitlichen Querrahmenteile 32, 34 zugeordnet ist. Das in den Figuren 7 und 8 rechte Ende 36a des linken Kraftgeräts 36 ist am zentralen Querrahmenteil 30 befestigt, während sein linkes Ende 36b an einer Abschlusswand 32a des linken seitlichen Querrahmenteils 32 befestigt ist. In analoger Weise ist das linke Ende 38a des rechten Kraftgeräts 38 am zentralen Querrahmenteil 30 befestigt, während sein rechtes Ende 36b an einer Abschlusswand 34a des rechten seitlichen Querrahmenteils 34 befestigt ist. Durch diese Trennung der Tragfunktion einerseits und der Längenverstellbarkeit andererseits können zum einen Standardteile verwendet werden, was die Herstellungskosten senkt, und brauchen zum anderen keine konstruktiven Kompromisse eingegangen zu werden, die die Funktionstüchtigkeit des Querrahmenmoduls beeinträchtigen könnten.

In einer vertikalen Seitenwand des Seitenabschnitts 30b des zentralen Querrahmenteils 30 ist ein dickenverstärkter Abschnitt 30d vorgesehen, in den eine Mehrzahl von Durchgangslöchern 30e eingebracht ist. In eines dieser Durchgangslöcher 30e greift ein Bolzen 32b ein, der an dem zugehörigen seitlichen Querrahmenteil 32 gehalten und mittels einer Feder 32c in Eingriff mit dem Durchgangsloch 30e vorgespannt ist. Zur Längenverstellung des Querrahmenmoduls 16 muss zunächst der Eingriff des Bolzens 32b in das Loch 30e aufgehoben werden. Anschließend erfolgt die Längenveränderung mittels des Kraftgeräts 36. Und schließlich wird der Bolzen 32b in das der neuen Längeneinstellung entsprechende Loch 30e. Auf diese Weise kann das Querrahmenmodul 16 in der neuen Längeneinstellung blockiert werden, so dass im Fahrbetrieb nicht die Gefahr einer unerwünschten Veränderung der Fahrzeugbreite besteht und eine exakte Breitenanordnung erreicht wird, an die Lenkung genau angepasst eingestellt werden kann.

Wie man Figur 7 entnimmt, ist auch dem rechten Seitenabschnitts 30c des zentralen Querrahmenteils 30 und dem diesem zugeordneten rechten seitlichen Querrahmenteil 34 eine identisch ausgebildete Feststelleinrichtung zugeordnet.

Schließlich verfügen alle Varianten von Querrahmenmodulen zumindest an einer ihrer Seiten, also an ihrer in Fahrtrichtung F gesehen vorderen bzw. hinteren Seite, über Kupplungselemente 40, wie sie auch an den Längsenden herkömmlicher Fahrzeugmodule 12, 14 vorhanden sind, um diese mit anderen Fahrzeugmodulen zu einem längeren Gesamtfahrzeug verbinden zu können. Zum Ankuppeln des Querrahmenmoduls 16 an die Fahrzeugmodule 12 und 14, werden die in Figur 8 linken Kupplungselemente 40 und die entsprechend ausgebildeten und in Figur 8 gestrichelt angedeuteten Gegenkupplungselementen des linken Fahrzeugmoduls 12 ineinander geführt und die in Figur 8 rechten Kupplungselemente 40 und die entsprechend ausgebildeten und in Figur 8 gestrichelt angedeuteten Gegenkupplungselementen des rechten Fahrzeugmoduls 14 ineinander geführt. Dieser Eingriff wird dann durch ebenfalls gestrichelt angedeutete Sicherungsbolzen 42 gesichert. Da die Kupplungselemente 40, wie man Figur 5 entnimmt, an der Unterseite des Querrahmenmoduls 16 angeordnet sind, und der Sicherungsbolzen 42 einen runden Querschnitt hat, wird das Querrahmenmodul 16 mit den Fahrzeugmodulen 12 und 14 auch noch dem oberen Rand des Querrahmenmoduls 16 benachbart verschraubt, um ein Nach-unten-Wegkippen des Querrahmenmoduls 16 zu verhindern. Die Stabilität des Schwerlastfahrzeugs 10 und die Übertragung von Zug- und Schubkräften während des Transports der Last wird jedoch praktisch vollständig von den Kupplungselementen 40, deren Gegenkupplungselementen und den Sicherungsbolzen 42 übernommen.

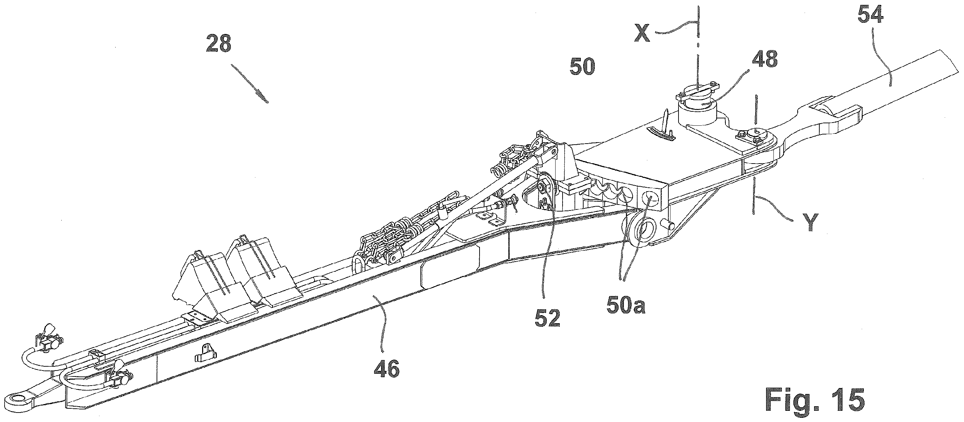

Bei der in den Figuren 5 bis 8 dargestellten ersten Variante weist das Querrahmenmodul 16 zusätzlich zu dem bis hierher beschriebenen Grundaufbau an seiner vorderen Seite weitere Kupplungselemente 44 auf die zur Verbindung mit einer Deichselbaugruppe 28 dienen, wie sie in Figur 15 dargestellt ist.

Die Deichselbaugruppe 28 umfasst eine Zugdeichsel 46, die mittels eines Achsbolzens 48, der auch die Öffnungen der Kupplungselemente 44 des Querrahmenmoduls 16 durchsetzt, um eine im Wesentlichen vertikal verlaufende Achse X schwenkbar an dem Querrahmenmodul 16 angebracht ist. Über die Zugdeichsel 46 und den Achsbolzen 48 werden die beim Transport auftretenden Zugkräfte in das Schwerlastfahrzeug 10 eingeleitet.

Oberhalb der Zugdeichsel 46 ist ein Lenkwinkelweiterleitungselement 50 angeordnet, das ebenfalls um die Achse X schwenkbar gelagert ist, wobei das Lenkwinkelweiterleitungselement 50 auch relativ zu der Zugdeichsel 46 verschwenkbar ist. Mittels eines an der Zugdeichsel 46 angeordneten Bolzens 52, der in eine einer Mehrzahl von Vertiefungen 50a des Lenkwinkelweiterleitungselements 50 eingreift, können jedoch verschiedene Relativschwenkstellungen von Zugdeichsel 46 und Lenkwinkelweiterleitungselement 50 fest eingestellt werden. Dies ermöglicht es, die Lenkwinkelweiterleitung von der Zugdeichsel 46 auf die zur Lenkeinrichtung des Schwerlastfahrzeugs 10 führende Lenkstange 54, die an dem Lenkwinkelweiterleitungselement 50 um eine von der Achse X beabstandete Achse Y schwenkbar gelagert ist und eine Durchgangsöffnung im Querrahmenmodul 16 durchsetzt, an die jeweils eingestellte Fahrzeugbreite anzupassen.

Hierzu ist es vorteilhaft, wenn zwischen den Vertiefungen 50a und den Durchgangslöchern 30e eine feste Zuordnung besteht und diese Zuordnung durch entsprechende Markierungen an dem Querrahmenmodul 16 und dem Lenkwinkelweiterleitungselement 50 für das Bedienungspersonal kenntlich gemacht ist.

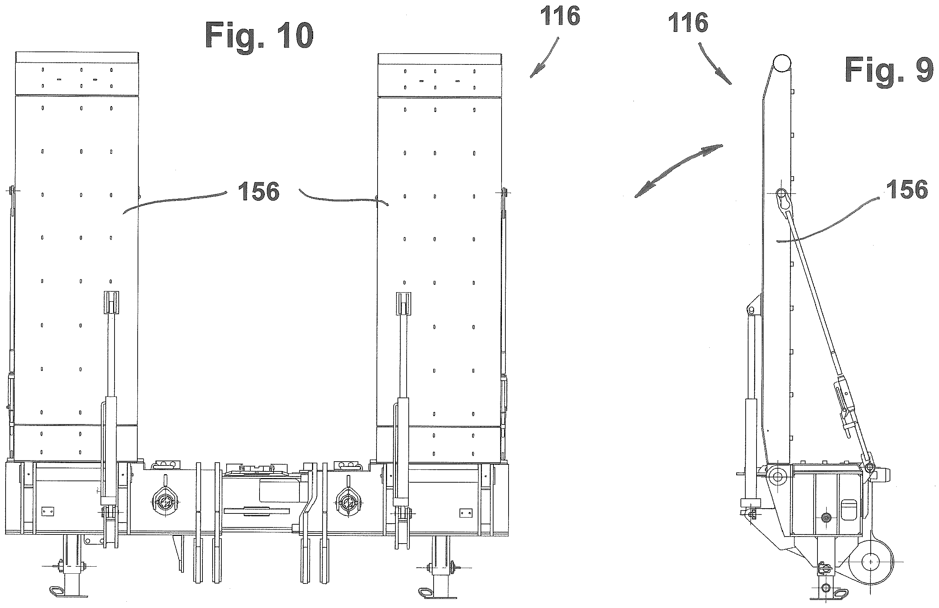

Anstelle des Querrahmenmoduls 18, das, wie vorstehend bereits erwähnt, identisch ausgebildet ist wie das Querrahmenmodul 16, jedoch um 180° gedreht am hinteren Ende des Schwerlastfahrzeugs 10 angeordnet ist, kann am hinteren Ende des Schwerlastfahrzeugs 10 auch das in den Figuren 9 und 10 dargestellte Querrahmenmodul 116 angeordnet werden. Hinsichtlich der Längenverstellbarkeit in Fahrzeugbreitenrichtung B und der Anbringung an den hinteren Enden der Fahrzeugmodule 12, 14 entspricht der Aufbau des Querrahmenmoduls 116 jenem des Querrahmenmoduls 16 der Figuren 5 bis 8. Daher wird das Querrahmenmodul 116 hier diesbezüglich nicht mehr beschrieben werden. Vielmehr wird diesbezüglich vollinhaltlich auf die Beschreibung des Querrahmenmoduls 16 Bezug genommen.

Das Querrahmenmodul 116 unterscheidet sich von dem Querrahmenmodul 16 lediglich dadurch, dass auf der Seite, an der beim Querrahmenmodul 16 die Kupplungselemente 44 für die Anbringung der Deichselbaugruppe 28 angeordnet sind, Auffahrrampen 156 für ein auf dem Schwerlastfahrzeug 10 zu transportierendes Fahrzeug schwenkbar angebracht sind.

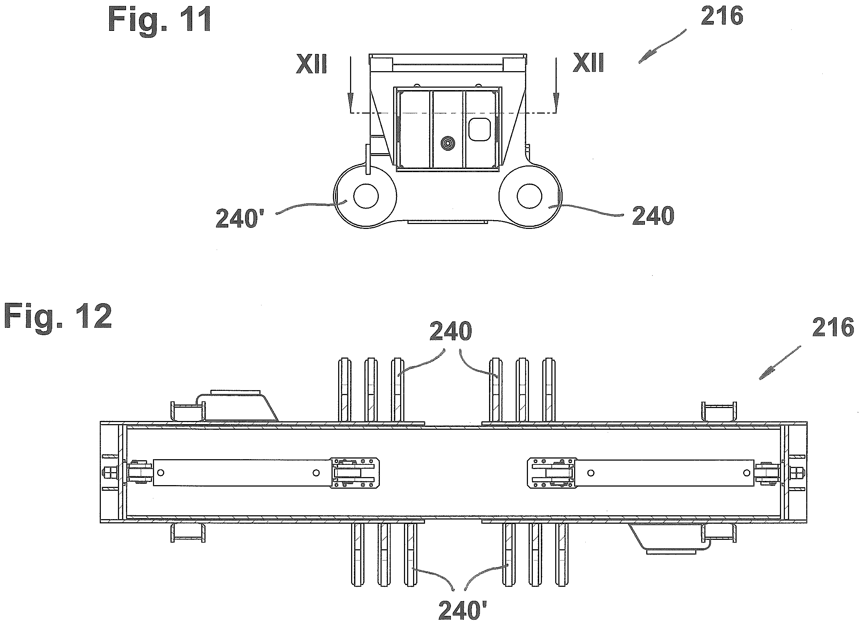

Anstelle des Querrahmenmoduls 16 (bzw. um 180° gedreht: 18) kann am hinteren Ende des Schwerlastfahrzeugs 10 auch das in den Figuren 11 und 12 dargestellte Querrahmenmodul 216 angeordnet werden. Hinsichtlich der Längenverstellbarkeit in Fahrzeugbreitenrichtung B und der Anbringung an den hinteren Enden der Fahrzeugmodule 12, 14 entspricht der Aufbau des Querrahmenmoduls 216 jenem des Querrahmenmoduls 16 der Figuren 5 bis 8. Daher wird das Querrahmenmodul 216 hier diesbezüglich nicht mehr beschrieben werden. Vielmehr wird diesbezüglich vollinhaltlich auf die Beschreibung des Querrahmenmoduls 16 Bezug genommen.

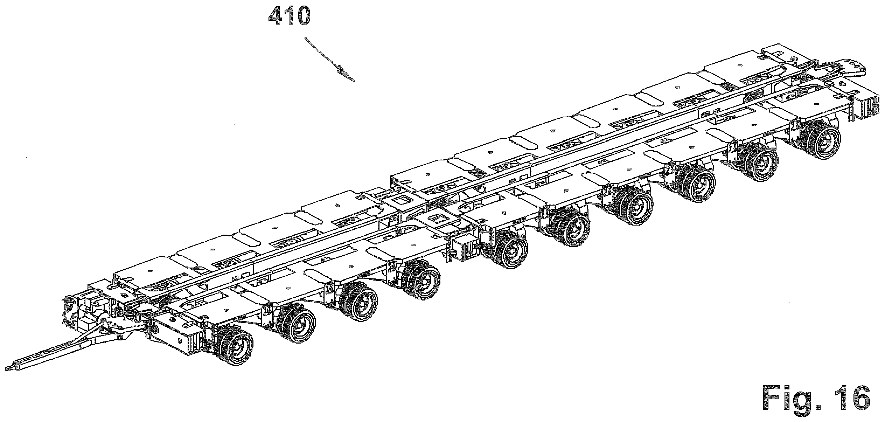

Das Querrahmenmodul 216 unterscheidet sich von dem Querrahmenmodul 16 lediglich dadurch, dass auf der Seite, an der beim Querrahmenmodul 16 die Kupplungselemente 44 für die Anbringung der Deichselbaugruppe 28 angeordnet sind, Kupplungselemente 240' angeordnet sind, die identisch ausgebildet sind wie die zur Verbindung mit den Fahrzeugmodulen 12, 14 dienenden Kupplungselemente 240. Auf diese Weise kann das Querrahmenmodul 216 sowohl auf seiner Vorderseite als auch auf seiner Hinterseite mit Fahrzeugmodulen verbunden werden. Es eignet sich also zur Verwendung als Zwischenquerrahmenmodul, wenn man ein längeres breitenverstellbares Schwerlastfahrzeug zusammenstellen möchte, beispielsweise das in Figur 16 dargestellte Schwerlastfahrzeug 410.

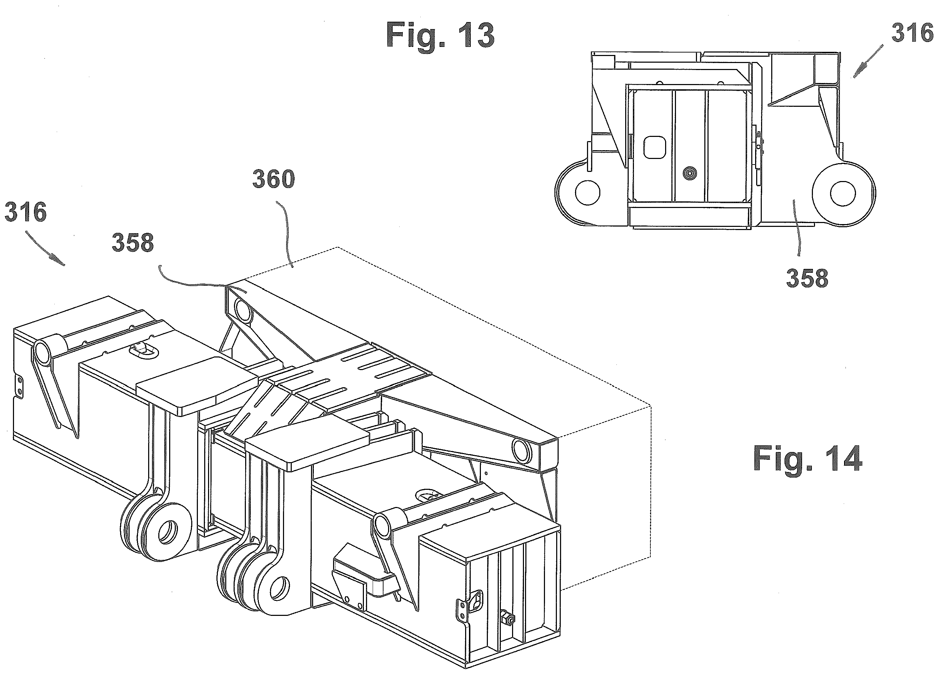

Anstelle des Querrahmenmoduls 16 (bzw. um 180° gedreht: 18) kann am hinteren Ende des Schwerlastfahrzeugs 10 auch das in den Figuren 13 und 14 dargestellte Querrahmenmodul 316 angeordnet werden. Hinsichtlich der Längenverstellbarkeit in Fahrzeugbreitenrichtung B und der Anbringung an den hinteren Enden der Fahrzeugmodule 12, 14 entspricht der Aufbau des Querrahmenmoduls 316 jenem des Querrahmenmoduls 16 der Figuren 5 bis 8. Daher wird das Querrahmenmodul 316 hier diesbezüglich nicht mehr beschrieben werden. Vielmehr wird diesbezüglich vollinhaltlich auf die Beschreibung des Querrahmenmoduls 16 Bezug genommen.

Das Querrahmenmodul 316 unterscheidet sich von dem Querrahmenmodul 16 lediglich dadurch, dass auf der Seite, an der beim Querrahmenmodul 16 die Kupplungselemente 44 für die Anbringung der Deichselbaugruppe 28 angeordnet sind, eine Anschlussvorrichtung 358 für die Befestigung eines in der Fahrzeugbreitenrichtung B nicht breitenverstellbaren Moduls 360, beispielsweise einer Antriebseinrichtung für das Schwerlastfahrzeug 10 bzw. 410.

## Patentansprüche

1. Modulares Schwerlastfahrzeug (10), umfassend:
ein linkes Fahrzeugmodul (12) mit einem sich in Fahrzeug-längsrichtung (L) erstreckenden linken Längsrahmenteil (20), an dem wenigstens zwei linke Radbaugruppen (22) in Fahrzeuglängsrichtung (L) gesehen hintereinander angebracht sind,
ein hiervon gesondert ausgebildetes rechtes Fahrzeugmodul (14) mit einem sich in Fahrzeuglängsrichtung (L) erstreckenden rechten Längsrahmenteil (24), an dem wenigstens zwei rechte Radbaugruppen (26) in Fahrzeuglängsrichtung (L) gesehen hintereinander angebracht sind, und
zwei sich in Fahrzeugbreitenrichtung (B) erstreckende Verbindungseinheiten, deren eines freies Ende mit dem linken Längsrahmenteil (20) verbunden ist und deren anderes freies Ende mit dem rechten Längsrahmenteil (24) verbunden ist,
wobei die beiden Verbindungseinheiten als längenveränderbare Querrahmenmodule (16, 18; 116; 216; 316) ausgebildet sind, welche sowohl von dem linken Längsrahmenteil (20) als auch dem rechten Längsrahmenteil (24) gesondert ausgebildet sind, und
wobei ein erstes dieser Querrahmenmodule (16) an dem einen Längsende der beiden Längsrahmenteile (20, 24) lösbar befestigbar ist, und das andere dieser Querrahmenmodule (18) an dem anderen Längsende der beiden Längsrahmenteile (20, 24) lösbar befestigbar ist,
**dadurch gekennzeichnet, dass** die linken und rechten Fahrzeugmodule mit ihren sich in Fahrzeuglängsrichtung erstreckenden linken und rechten Längsrahmenteilen frei von für die Bereitstellung der Längenveränderbarkeit erforderlichen Funktionselementen ausgebildet sind.

2. Schwerlastfahrzeug nach Anspruch 1,
**dadurch gekennzeichnet, dass** wenigstens ein Querrahmenmodul (16, 18; 116; 216; 316) teleskopierbar ineinander greifende, einen Hohlraum umschließende Querrahmenteile (30, 32, 34) umfasst, wobei in dem Hohlraum wenigstens ein die Längenveränderung des Querrahmenmoduls bewirkendes Kraftgerät (36, 38) angeordnet ist.

3. Schwerlastfahrzeug nach Anspruch 1 oder 2,
**dadurch gekennzeichnet, dass** wenigstens ein Querrahmenmodul (16, 18; 116; 216; 316) ein zentrales Querrahmenteil (30) mit zwei Seitenabschnitten (30b, 30c) sowie zwei seitliche Querrahmenteile (32, 34), die die Seitenabschnitte (30b, 30c) des zentralen Querrahmenteils (30) umgreifen und relativ zu diesen verschiebbar sind, umfasst.

4. Schwerlastfahrzeug nach Anspruch 3,
**dadurch gekennzeichnet, dass** zwischen den beiden Seitenabschnitten (30b, 30c) des zentralen Querrahmenteils (30) ein Mittelabschnitt (30a) vorgesehen ist, der vorzugsweise mit den beiden Seitenabschnitten (30b, 30c) einstückig ausgebildet ist.

5. Schwerlastfahrzeug nach Anspruch 3 oder 4,
**dadurch gekennzeichnet, dass** an den beiden seitlichen Rahmenteilen (32, 34) wenigstens ein Funktionselement (40;156; 240, 240') anbringbar ist, welches bei einer Veränderung der Fahrzeugbreite ebenfalls in der Breitenrichtung (B) des Fahrzeugs verstellt wird.

6. Schwerlastfahrzeug nach Anspruch 5,
**dadurch gekennzeichnet, dass** das wenigstens eine Funktionselement, welches bei einer Veränderung der Fahrzeugbreite ebenfalls in der Breitenrichtung (B) des Fahrzeugs verstellt wird, wenigstens ein Kupplungselement (40; 240) für das Ankuppeln des Querrahmenmoduls (16; 216) an die linken und rechten Fahrzeugmodule (12, 14) oder/und wenigstens ein Kupplungselement (240') für das Ankuppeln des Querrahmenmoduls als Zwischenglied zwischen mehreren hintereinander angeordneten Fahrzeugmodulen (12, 14) beim Zusammenbau eines modularen Schwerlastfahrzeugs, das in Fahrzeuglängsrichtung (L) über mehrere hintereinander angeordnete linke und rechte Fahrzeugmodule (12, 14) verfügt, oder/und wenigstens eine klappbare Auffahrrampe (156) umfasst.

7. Schwerlastfahrzeug nach einem der Ansprüche 4 bis 6,
**dadurch gekennzeichnet, dass** an dem Mittelabschnitt (30a) wenigstens ein Funktionelement (44; 358) anbringbar ist, welches bei einer Veränderung der Fahrzeugbreite nicht in der Breitenrichtung (B) des Fahrzeugs zu verstellen ist.

8. Schwerlastfahrzeug nach Anspruch 7,
**dadurch gekennzeichnet, dass** das wenigstens eine Funktionselement, welches bei einer Veränderung der Fahrzeugbreite nicht in der Breitenrichtung (B) des Fahrzeugs zu verstellen ist, wenigstens ein Kupplungselement (358) für das Ankuppeln des Querrahmenmoduls an ein in der Breite nicht verstellbares Fahrzeugmodul (360) oder/und wenigstens ein Kupplungselement (44) für die Anbringung einer Deichselbaugruppe (28) umfasst.

9. Schwerlastfahrzeug nach einem der Ansprüche 1 bis 8,
**dadurch gekennzeichnet, dass** wenigstens ein Querrahmenmodul (16, 18; 116; 216; 316) an der Stirnfläche des jeweils zugeordneten Längsendes der beiden Längsrahmenteile (20, 24) lösbar befestigbar ist.

10. Schwerlastfahrzeug nach einem der Ansprüche 2 bis 9,
**dadurch gekennzeichnet, dass** jedem der seitlichen Querrahmenteile (32, 34) ein gesondertes Kraftgerät (36, 38) zugeordnet ist, dessen eines Ende an dem zentralen Querrahmenteil (30) und dessen anderes Ende an dem jeweiligen seitlichen Querrahmenteil (32, 34) angreift.

11. Schwerlastfahrzeug nach einem der Ansprüche 1 bis 10,
**dadurch gekennzeichnet, dass** das wenigstens eine Querrahmenmodul (16, 18; 116; 216; 316) in einem zur Fahrzeugbreitenrichtung (B) im Wesentlichen orthogonal verlaufenden Schnitt ein Rechtecks- oder Quadratprofil aufweist.

12. Schwerlastfahrzeug nach einem der Ansprüche 3 bis 11,
**dadurch gekennzeichnet, dass** die seitlichen Querrahmenteile (32, 34) und der jeweils zugehörige Seitenabschnitt (30b, 30c) des zentralen Querrahmenteils (30) in lösbarer Weise starr miteinander verbindbar sind.

13. Schwerlastfahrzeug nach einem der Ansprüche 3 bis 12,
**dadurch gekennzeichnet, dass** eine Anzeige vorgesehen ist, welcher die Relativstellung des seitlichen Querrahmenteils (32, 34) und des zugehörigen Seitenabschnitts (30b, 30c) des zentralen Querrahmenteils (30) entnehmbar ist.

14. Schwerlastfahrzeug nach einem der Ansprüche 1 bis 13,
**dadurch gekennzeichnet, dass** ein Lenkwinkelweiterleitungselement (50) vorgesehen ist, welches relativ zur Deichsel (46) verschwenkbar und mit der Deichsel (46) in wenigstens einer Relativschwenkstellung lösbar verbindbar ist.

15. Schwerlastfahrzeug nach Anspruch 14,
**dadurch gekennzeichnet, dass** die Achse (X), um welche das Lenkwinkelweiterleitungselement (50) relativ zur Deichsel (46) verschwenkbar ist, mit der Achse (X), um welche die Deichsel (46) relativ zum modularen Schwerlastfahrzeug schwenkbar ist, identisch ist.

## Claims

1. Modular heavy goods vehicle (10) comprising:
a left-hand vehicle module (12) having a left-hand longitudinal frame part (20) that extends in the vehicle length direction (L) and to which at least two left-hand wheel assemblies (22) are attached one behind the other when viewed in the vehicle length direction (L),
a right-hand vehicle module (14) that is formed separately from said left-hand module and has a right-hand longitudinal frame part (24) that extends in the vehicle length direction (L) and to which at least two right-hand wheel assemblies (26) are attached one behind the other when viewed in the vehicle length direction (L), and
two connection units that extend in the vehicle width direction (B), one free end of which units is connected to the left-hand longitudinal frame part (20) and the other free end of which is connected to the right-hand longitudinal frame part (24),
the two connection units being designed as length-variable cross-frame modules (16, 18; 116; 216; 316) that are formed separately from both the left-hand longitudinal frame part (20) and the right-hand longitudinal frame part (24), and
a first of said cross-frame modules (16) being releasably attachable to one longitudinal end of the two longitudinal frame parts (20, 24) and the other of said cross-frame modules (18) being releasably attachable to the other longitudinal end of the two longitudinal frame parts (20, 24), **characterised in that** the left-hand and right-hand vehicle modules, by means of the left-hand and right-hand longitudinal frame parts thereof that extend in the vehicle length direction, are designed to be free of functional elements required for the provision of the length variation.

2. Heavy goods vehicle according to claim 1, **characterised in that** at least one cross-frame module (16, 18; 116; 216; 316) comprises cross-frame parts (30, 32, 34) that mutually engage in a telescopic manner and enclose a cavity, at least one power means (36, 38) that causes the length variation of the cross-frame module being arranged in the cavity.

3. Heavy goods vehicle according to either claim 1 or claim 2, **characterised in that** at least one cross-frame module (16, 18; 116; 216; 316) comprises a central cross-frame part (30) having two side portions (30b, 30c) and two lateral cross-frame parts (32, 34) that surround the side portions (30b, 30c) of the central cross-frame part (30) and are movable relative thereto.

4. Heavy goods vehicle according to claim 3, **characterised in that** a middle portion (30a) is provided between the two side portions (30b, 30c) of the central cross-frame part (30), which middle portion is preferably formed integrally with the two side portions (30b, 30c).

5. Heavy goods vehicle according to either claim 3 or claim 4, **characterised in that** at least one functional element (40; 156; 240, 240') is attachable to the two lateral frame parts (32, 34), which element is also adjusted in the width direction (B) of the vehicle when the vehicle width is varied.

6. Heavy goods vehicle according to claim 5, **characterised in that** the at least one functional element that is also adjusted in the width direction (B) of the vehicle when the vehicle width is varied comprises at least one coupling element (40; 240) for coupling the cross-frame module (16; 216) to the left-hand and right-hand vehicle modules (12, 14), and/or at least one coupling element (240') for coupling the cross-frame module in the form of a link between a plurality of vehicle modules (12, 14) arranged one behind the other when assembling a modular heavy goods vehicle that comprises a plurality of left-hand and right-hand vehicle modules (12, 14) arranged one behind the other in the vehicle length direction (L), and/or at least one folding loading ramp (156).

7. Heavy goods vehicle according to any of claims 4 to 6, **characterised in that** at least one functional element (44; 358) that is not to be adjusted in the width direction (B) of the vehicle when the vehicle width is varied is attachable to the middle portion (30a).

8. Heavy goods vehicle according to claim 7, **characterised in that** the at least one functional element that is not to be adjusted in the width direction (B) of the vehicle when the vehicle width is varied comprises at least one coupling element (358) for coupling the cross-frame module to a vehicle module (360) of which the width is not adjustable, and/or at least one coupling element (44) for attaching a drawbar assembly (28).

9. Heavy goods vehicle according to any of claims 1 to 8, **characterised in that** at least one cross-frame module (16, 18; 116; 216; 316) is releasably attachable to the end face of the respectively assigned longitudinal end of the two longitudinal frame parts (20, 24).

10. Heavy goods vehicle according to any of claims 2 to 9, **characterised in that** a separate power means (36, 38) is assigned to each of the lateral cross-frame parts (32, 34), one end of which power means engages with the central cross-frame part (30) and the other end of which engages with the particular lateral cross-frame part (32, 34).

11. Heavy goods vehicle according to any of claims 1 to 10, **characterised in that** the at least one cross-frame module (16, 18; 116; 216; 316) has a rectangular or square profile in a cross section extending substantially orthogonally to the vehicle width direction (B).

12. Heavy goods vehicle according to any of claims 3 to 11, **characterised in that** the lateral cross-frame parts (32, 34) and the respectively associated side portion (30b, 30c) of the central cross-frame part (30) are rigidly interconnectable in a releasable manner.

13. Heavy goods vehicle according to any of claims 3 to 12, **characterised in that** a display is provided, from which the relative position of the lateral cross-frame part (32, 34) and of the associated side portion (30b, 30c) of the central cross-frame part (30) is visible.

14. Heavy goods vehicle according to any of claims 1 to 13, **characterised in that** a steering angle forwarding element (50) is provided that is pivotable relative to the drawbar (46) and is releasably connectable to the drawbar (46) in at least one relative pivot position.

15. Heavy goods vehicle according to claim 14, **characterised in that** the axis (X) about which the steering angle forwarding element (50) is pivotable relative to the drawbar (46) is identical to the axis (X) about which the drawbar (46) is pivotable relative to the modular heavy goods vehicle.

## Revendications

1. Véhicule poids lourd modulaire (10), comprenant :
un module côté gauche (12) doté d'un élément de charpente allongé côté gauche (20) s'étendant dans le sens de la longueur du véhicule (L), auquel au moins deux groupes essieux côté gauche (22) sont agencés l'un derrière l'autre dans le sens de la longueur du véhicule (L),
un module côté droit (14), conçu séparé de ce qui précède, doté d'un élément de charpente allongé côté droit (24) s'étendant dans le sens de la longueur du véhicule (L), auquel au moins deux groupes essieux côté droit (26) sont agencés l'un derrière l'autre dans le sens de la longueur du véhicule (L), et
deux unités de raccordement s'étendant dans le sens de la largeur du véhicule (B), dont une extrémité libre est raccordée à l'élément de charpente allongé côté gauche (20) et dont l'autre extrémité libre est raccordée à l'élément de charpente allongé côté droit (24),
dans lequel les deux unités de raccordement sont conçues comme des modules de châssis réglables en longueur (16, 18 ; 116 ; 216 ; 316), lesquels sont conçus pour être séparés aussi bien de l'élément de charpente allongé côté gauche (20) que de l'élément de charpente allongé côté droit (24), et
dans lequel qu'un premier de ces modules de châssis (16) est fixé de manière détachable à l'une des extrémités longues des deux éléments de charpente allongés (20, 24) et l'autre module de châssis (18) est fixé de manière détachable à l'autre extrémité longue des deux éléments de charpente allongés (20, 24),
**caractérisé en ce que** les modules côté gauche et côté droit sont conçus avec leurs éléments de charpente droit et gauche s'étendant dans le sens de la longueur du véhicule pour être dépourvus d'éléments de fonction nécessaires pour la variabilité de la longueur.

2. Véhicule poids lourd selon la revendication 1, **caractérisé en ce qu'**au moins un module de châssis (16, 18 ; 116 ; 216 ; 316) comprend des parties de châssis (30, 32, 34) s'emboîtant l'une dans l'autre de manière télescopique et entourant un espace creux, dans lequel au moins un appareil de puissance (36, 38) opérant la variation de longueur du module de châssis est agencé dans l'espace creux.

3. Véhicule poids lourd selon la revendication 1 ou 2, **caractérisé en ce qu'**au moins un module de châssis (16, 18 ; 116 ; 216 ; 316) comprend une partie de châssis centrale (30) dotée de deux sections latérales (30b, 30c) ainsi que deux parties de châssis latérales (32, 34) qui entourent les sections latérales (30b, 30c) de la partie de châssis centrale (30) et peuvent coulisser par rapport à celles-ci.

4. Véhicule poids lourd selon la revendication 3, **caractérisé en ce qu'**une section médiane (30a) est prévue entre les deux sections latérales (30b, 30c) de la partie de châssis centrale (30), conçue de préférence d'une pièce avec les deux sections latérales (30b, 30c).

5. Véhicule poids lourd selon la revendication 3 ou 4, **caractérisé en ce qu'**au moins un élément de fonction (40 ; 156 ; 240 ; 240') peut être agencé aux deux parties de châssis latérales (32, 34) et est ajusté également dans le sens de la largeur (B) du véhicule lors d'une modification de la largeur du véhicule.

6. Véhicule poids lourd selon la revendication 5, **caractérisé en ce que** l'au moins un élément de fonction, lequel est ajusté également dans le sens de la largeur (B) du véhicule lors d'une modification de la largeur du véhicule, comprend au moins un élément de couplage (40 ; 240) pour accoupler le module de châssis (16 ; 216) aux modules de véhicules côté gauche et côté droit (12, 14) et/ou comprend au moins un élément de couplage (240') pour accoupler le module de châssis comme élément intermédiaire entre plusieurs modules de véhicules (12, 14) agencés l'un derrière l'autre lors de l'assemblage d'un véhicule poids lourd modulaire, disposant dans le sens de la longueur du véhicule (L) de plusieurs modules de véhicule (12, 14) côté gauche et droit agencés l'un derrière l'autre et/ou comprend au moins une rampe repliable (156).

7. Véhicule poids lourd selon l'une des revendications 4 à 6, **caractérisé en ce qu'**au moins un élément de fonction (44 ; 358) peut être agencé à la partie de châssis centrale (30a) et ne doit pas être ajusté dans le sens de la largeur (B) du véhicule lors d'un ajustage de la largeur du véhicule.

8. Véhicule poids lourd selon la revendication 7, **caractérisé en ce que** l'au moins un élément de fonction qui ne doit pas être ajusté dans le sens de la largeur (B) du véhicule lors d'un ajustage de la largeur du véhicule, comprend au moins un élément de couplage (358) pour accoupler le module de châssis à un module de véhicule non-ajustable en largeur (360) et/ou au moins un élément de couplage (44) destiné au montage d'un groupe de barre de remorquage (28).

9. Véhicule poids lourd selon l'une des revendications 1 à 8, **caractérisé en ce qu'**au moins un module de châssis (16, 18 ; 116 ; 216 ; 316) peut être fixé de manière détachable à la surface avant de l'extrémité longitudinale respectivement ordonnée des deux éléments de charpente allongés (20, 24).

10. Véhicule poids lourd selon l'une des revendications 2 à 9, **caractérisé en ce que** chaque partie de châssis latérale (32, 34) est ordonnée à un appareil de puissance séparé (36, 38), dont une extrémité s'engage avec la partie de châssis centrale (30) et dont l'autre extrémité s'engage avec la partie de châssis latérale (32, 34) respective.

11. Véhicule poids lourd selon l'une des revendications 1 à 10, **caractérisé en ce que** l'au moins un module de châssis (16, 18 ; 116 ; 216 ; 316) comporte dans une section essentiellement orthogonale au sens de la largeur du véhicule (B) un profil rectangulaire ou carré.

12. Véhicule poids lourd selon l'une des revendications 3 à 11, **caractérisé en ce que** les parties de châssis latérales (32, 34) et les sections latérales (30b, 30c) de la partie de châssis centrale (30) s'y rattachant respectivement sont raccordables rigidement l'une à l'autre de manière détachable.

13. Véhicule poids lourd selon l'une des revendications 3 à 12, **caractérisé en ce qu'**est prévu un affichage indiquant la position relative de la partie de châssis latérale (32, 34) et de la section latérale (30b, 30c) de la partie de châssis centrale (30) s'y rattachant.

14. Véhicule poids lourd selon l'une des revendications 1 à 13, **caractérisé en ce qu'**est prévu un élément de transmission de l'angle de braquage (50), pouvant pivoter relativement à la barre de remorquage (46) et raccordable de manière détachable à la barre de remorquage dans au moins une position de pivotement relatif.

15. Véhicule poids lourd selon la revendication 14, **caractérisé en ce que** l'axe (X) autour duquel l'élément de transmission de l'angle de braquage (50) peut pivoter relativement à la barre de remorquage (46), est identique à l'axe (X) autour duquel la barre de remorquage (46) peut pivoter relativement au véhicule poids lourd modulaire.
